# EUROPEAN PATENT SPECIFICATION

(11) **EP 3 588 900 B1**
(45) Date of publication and mention of the grant of the patent: **05.10.2022**
(21) Application number: 19173066.2
(22) Date of filing: 07.05.2019
(51) Int. Cl.: H04L 9/40, H04L 67/141, H04L 45/00

(54) **SYSTEM AND METHOD OF ANALYZING THE CONTENT OF ENCRYPTED NETWORK TRAFFIC**
SYSTEM UND VERFAHREN ZUR ANALYSE DES INHALTS VON VERSCHLÜSSELTEM NETZWERKVERKEHR
SYSTÈME ET PROCÉDÉ D'ANALYSE DU CONTENU D'UN TRAFIC DE RÉSEAU CHIFFRÉ

(30) Priority: 29.06.2018 RU 2018123684; 14.02.2019 US 201916275841
(43) Date of publication of application: 01.01.2020
(73) Proprietor: AO Kaspersky Lab, Moscow 125212 (RU)
(72) Inventor: KOGAN, Sergey V., 125212 MOSCOW (RU); RODIONOV, Denis V., 125212 MOSCOW (RU); MAKAROV, Alexander N., 125212 MOSCOW (RU); TOTMAKOV, Alexey S., 125212 MOSCOW (RU); KOLMAKOV, Petr Y., 125212 MOSCOW (RU)
(74) Representative: Chimini, Francesco

(56) References cited:
- US-A1- 2012 066 698
- US-B1- 9 626 509
- US-B1- 9 800 560
- US-B2- 9 893 897

## Description

### FIELD OF TECHNOLOGY

The present disclosure relates to systems and methods for analysis of protected network connections and more specifically to systems and methods of analyzing the content of encrypted network traffic to detect malicious objects.

### BACKGROUND

In a reliable solution for antivirus protection of computer systems, several layers of protection should be provided. One such layer is the protection of the users against cyber threats when connected to the Internet by analyzing network traffic. In order to secure computer systems, antivirus protection performs analysis by routing network traffic through a proxy server. The proxy server extracts and analyzes the data of web site pages (HTML), files of various types (executable files, images, text documents, etc.), scripts, and the like to ensure user and computer security. Data in the context of a web browser's connections to remote web servers may be transmitted in open and in encrypted form. The Internet standard for protection of data transmissions at present is the transport layer cryptographic protection protocol (Transport Layer Security, TLS), which is used together with standard data transmission protocols forming, for example, the HTTPS (Hypertext Transfer Protocol Secure) protocol. In order to provide access to encrypted data of network traffic for the security systems, the proxy server substitutes the certificate of the web site in the course of the "handshake" procedure when establishing the protected connection. In the case of HTTPS connections, this results in the web browsers finding a non-original certificate for the web site and notifying the user about this. Alternatively, in the case of EV (Extended Validation) certificates, which are certificates of high reliability, the EV status is additionally lost at the web site, as indicated by the green bar alongside the address string of the web browser. The presence of the green bar tells the visitors that the web site is genuine. As a result, the intervention in the protected data transmission protocols in the context of a connection between a web browser and a web site leads to a negative impression for the users of antivirus solutions and a lower user experience (UX) criterion. Another example of applications (besides web browsers) needing an analysis of the network traffic for protecting a user against cyber threats on the Internet is messengers (Instant Messenger, or IM). US 9 893 897 B2 discloses technologies for analyzing an encrypted network flow.

The claimed invention makes it possible to perform an analysis of the content of encrypted network traffic without intervening in the security protocols when establishing the protected connection.

Aspects of the disclosure propose methods and systems that analyze the content of encrypted network traffic without intervention in the security protocols during the establishing of a protected connection.

### SUMMARY

Aspects of the present disclosure are directed to systems and methods of analyzing the content of encrypted network traffic to detect malicious objects.

The technical result of the present disclosure is to expand the arsenal of tools designed to accomplish the purpose of the proposed invention.

The present invention is defined in the independent claims. Preferred embodiments are defined in the dependent claims.

In one example, a method comprises rerouting traffic between a first process executing on a first computing device and a second process, to a server, to determine that there is a protected connection established between the first process and the second process, determining information related to an application pertaining to the first process, obtaining a session key for the protected connection by calling a function, wherein the information comprises an address of the function to call to obtain the session key, decrypting and analyzing the rerouted traffic on the server between the first process and the second process using the session key to determine whether the traffic contains malicious objects, and in response to determining the traffic contains malicious objects, counteracting the malicious objects by blocking or rerouting the traffic.

In one example, the method further comprises injecting a program module into an address space of the first process and obtaining the session key by instructing the program module to intercept a function called in establishing the protected connection.

In one example, the information related to the application is determined by querying the database containing a list of address of functions that return the session key for a plurality of applications.

In one example, the method further comprises finding the function in an import table of the application using the address retrieved from the database and placing a pointer to an intercepting function that copies the session key in place of the function called in establishing the protected connection.

In one example, the information is determined based at least on the version of the application.

In one example, the method further comprises verifying, prior to intercepting, compatibility of the version of the application with the method of analysis of content of the traffic between the first process and the second process.

In one example, the information is determined using program debugging files.

In one example, the server is a proxy server and the analysis is performed synchronously, wherein the traffic rerouted through the proxy server is delayed until analysis is complete and the malicious objects are removed from the traffic.

In one example, the server is a proxy server and the analysis is performed asynchronously, wherein the analysis is performed continuously without delaying traffic rerouted through the proxy server.

In one example, the application is a web browser.

In another example, a system is provided for analysis of content of encrypted traffic between processes. The system comprising: a processor configured to reroute traffic between a first process executing on a first computing device and a second process, to a server, to determine that there is a protected connection established between the first process and the second process, determine information related to an application pertaining to the first process, obtain a session key for the protected connection by calling a function, wherein the information comprises an address of the function to call to obtain the session key, decrypt and analyzing the rerouted traffic on the server between the first process and the second process using the session key to determine whether the traffic contains malicious objects and in response to determining the traffic contains malicious objects, counteract the malicious objects by blocking or rerouting the traffic.

The above simplified summary of example aspects of the disclosure serves to provide a basic understanding of the disclosure. This summary is not an extensive overview of all contemplated aspects, and is intended to neither identify key or critical elements of all aspects nor delineate the scope of any or all aspects of the disclosure. To the accomplishment of the foregoing, the one or more aspects of the disclosure include the features described and particularly pointed out in the claims.

### BREIF DESCRIPTION OF THE DRAWINGS

The accompanying drawings, which are incorporated into and constitute a part of this specification, illustrate one or more example aspects of the present disclosure and, together with the detailed description, serve to explain their principles and implementations.
**Fig. 1** illustrates a block diagram of a system of analyzing the content of encrypted network traffic between a web browser and a web site.
**Fig. 2** illustrates the architecture of the system of analyzing the content of encrypted traffic between processes.
**Fig. 3** is a flow diagram of a method for analyzing the content of encrypted network traffic between a web browser and a web site.
**Fig. 4** shows an example of a general-purpose computer system.

### DETAILED DESCRIPTION

Exemplary aspects are described herein in the context of a system, method and computer program product for analyzing the content of encrypted network traffic for malicious objects. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

Encryption is an obvious method of concealing information from outside parties in the process of its transmittal. However, occasionally for purposes of ensuring the security, intercepted traffic is also decrypted in order to scan for the presence of signs of suspicious network activity, for example. One of the most widespread protocols at present, ensuring a protected transmission of data between nodes on the Internet, is the Transport Layer Security (TLS) protocol. This protocol is widely used in applications working with the Internet, such as web browsers, applications working with email, the exchanging of instant messages, and IP telephony (VoIP or Voice over Internet Protocol). Asymmetrical crypto-systems (with a public key) are not suited to a rapid transmittal of data streams. Therefore, symmetrical ciphers are used for encrypting data within a TLS session. These are usually block ciphers. In symmetrical ciphers, the identical key is used for the encrypting and decrypting. This key is called the session encryption key. The nodes agree on the symmetrical session encryption keys in the process of establishing the protected connection (handshake). Thus, after establishing the connection, the session encryption key is possessed by each side. It should be noted that the client (the web browser) initiates establishing the protected connection with the server (the web site). Upon such a request, in one example, the proxy server may detect the establishing of a protected connection. In order to perform the analysis of the encrypted network traffic in the context of the proposed invention, the antivirus protection means must obtain the session encryption key.

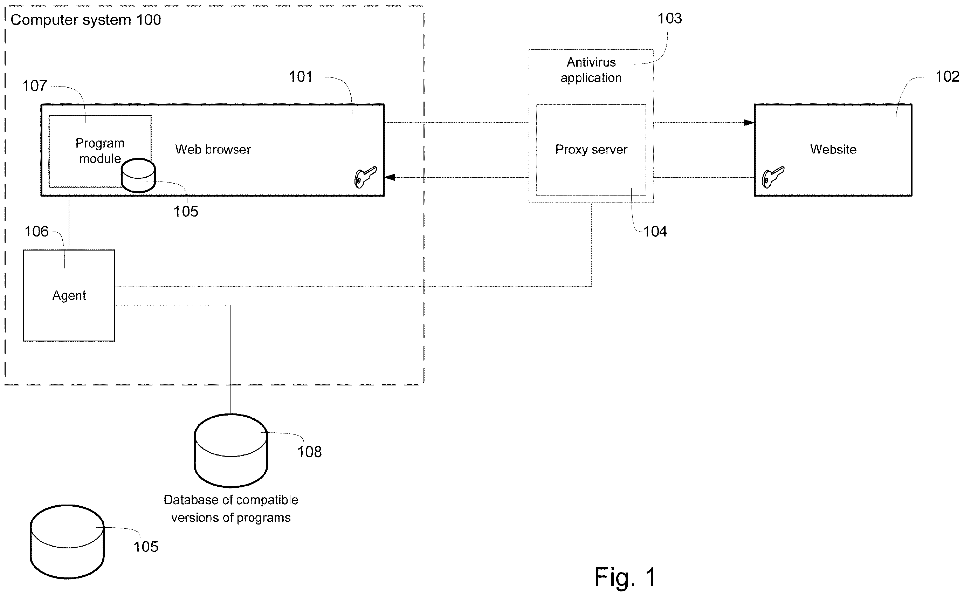

An example of a system of analyzing the content of encrypted network traffic between a web browser and a web site is shown in Fig. 1. The figure shows a computer system 100 on which are running a web browser 101 and agent 106. A web browser 101 and an agent 106 are processes that are executed on the computing device of the user of a computer system **100.** In one example, an antivirus protection means **103** and a proxy server **104** running under the control of the antivirus protection means **103** are executed on a remote server. In this variant, the agent **106** is a security application (such as an antivirus application) or a portion thereof and it is executed on the computer system **100.** In another example, the antivirus protection means **103** is a security application (such as an antivirus application) and it is executed on the computing device of the user of the computer system **100.** In this variant, the proxy server **104** and the agent **106** are means running on the computer system **100** under the control of the antivirus protection means **103.**

The network traffic between the web browser **101** and a website **102** flows through the proxy server **104.** The agent **106** has access to a database **105** containing the information needed for the agent **106** to obtain the session encryption key. The agent **106** transfers the session key so obtained to the antivirus protection means **103.** The database **105** is kept on a remote server or in a cloud service and in one example it has a local copy which is kept on the computer system **100** and synchronized with the remotely residing database **105.** The agent **106** also has access to a database of compatible program versions **108,** that, similar to the database **105,** is kept on a remote server or in a cloud service. In one example, there is a local copy of the database kept on the computer system **100** and synchronized with the remotely residing database of compatible program versions **108.**

The proxy server **104** within the claimed invention is a means allowing the antivirus protection means **103** to perform a search for and a deletion of all kinds of viruses, worms, Trojan horses and other malicious programs in the data stream between the web browser **101** and the website **102.**

In one example, the antivirus protection means **103** is able to perform any combination of functions related to the security of the computer system **100,** such as: counteracting malicious objects, detecting and deleting malicious objects, and neutralizing threats. These functions related to the security are described below only in general outline, as an illustration, and they do not constitute an exhaustive list of the functions relating to security under consideration. Various other functions relating to security may be used in addition to or in place of any of the functions relating to security and cited as an example in the present document.

Counteracting malicious objects involves blocking malicious objects, such as viruses, worms, and other malicious programs, advertising software, key logger programs, spam and so forth. Counteracting the malicious objects may also include blocking of unwanted traffic (by the proxy server **104**), such as hacker attacks, before any of these objects is able to realize its malicious potential on the computer system **100.** Blocking the unwanted traffic may include blocking or rerouting the traffic content using the firewall, and also by the proxy server **104.**

The detection and removal of malicious objects is employed for objects which have gotten past the checks designed to prevent penetration and are now present in one form or another on the local device **100,** including when the analysis of the network traffic on the proxy server **104** is being done in an asynchronous mode.

The neutralization of threats is employed to detect unwanted content and to detect attacks or threats in real time and it involves taking steps to shut down any suspicious programs or processes, to block the network traffic by the antivirus protection module **103,** and to restore the system to its last known secure condition. The antivirus protection module **103** contains a set of components such as a firewall, a filter of email messages, an antivirus module/module for blocking of unwanted content/utility for removal of malicious software, a system for backup data copying and restoration, and also an intrusion prevention and detection system (IPS / IDS). These components may work in various combinations to realize the different functions of the antivirus protection module **103.**

In order to gain access to the session encryption key, the agent **106** running under the control of the antivirus protection means **103** introduces a program module **107** into the address space of the process of the web browser **101.** The program module **107,** using information from the database **105,** determines the address of the API function (or simply a function) which allows it to obtain the session encryption key. In one example, the calling of the given API function returns the generated session encryption key. In another example, the given API function is characterized in that a buffer containing the generated session encryption key is transferred to it as input parameters.

For obvious reasons, the information about such API functions is not documented, and as a result it is not publicly available. Moreover, each version of the web browser **101** may have different API functions residing at different addresses. The program code of the web browsers **101** ending up on the computer systems **100** of the users is a sequence of bytes in hex code, not containing data allowing an identification of functions. For example, the API function being sought is called GetTLSKey(), but during the assembly of the application of the web browser **101,** all the names of the functions are removed by the compiler. Only the addresses remain at which the calls of the corresponding functions occur. For example, instead of the name of the API function GetTLSKey(), an address of the kind 0x80555f1 is indicated.

The database **105** contains a list of the addresses of the sought API function, corresponding to the versions of the web browsers **101.** The database **105** is formed and constantly updated by specialists in computer security (such as the specialists of an antivirus company) by methods of reverse engineering. It is also possible to use PDB (program database) files to determine the address of the sought API function - these are program-debugging files, special files containing debugging symbols in which information is found as to which addresses correspond to which variables and functions. For example, by utilizing a certain PDB file one may learn that the variable at the address 0x80484e1 is called tlsKey, while the function at the address 0x80555f1 is called GetTLSKey(). The PDB files containing the sought information are not made public and may only be obtained directly from the company developing the application in question (such as a web browser). For each version of a web browser **101** it is necessary to obtain the corresponding PDB, find out which API function is needed, and find its address in the PDB, in order to add a record to the database **105.**

In one example, the program module **107** to be introduced into the address space of the web browser **101** may intercept the mentioned sought API function which is called up in the process of establishing the protected connection. The technology of intercepting API function calls involves various approaches, which may be employed in the context of the present disclosure. One of the approaches is based on the fact that the calls of any given API functions in a process corresponding to a web browser **101** from the DLL libraries are carried out through a function import table. This table is filled in during the loading of the DLL into the process, and the addresses of all imported functions which might be needed by the process are written therein. The functions may include the API function that receives, as one of its arguments, the session encryption key generated in the process of establishing the protected connection. Accordingly, in order to intercept the API function call, the program module **107** will find the import table, and in it using the address from the database **105** it will find the API function whose call needs to be intercepted, and it places in the found import table a pointer to another function in place of the original API function. The other function whose pointer is placed in the import table in place of the original API function is a function allowing the copying of the session encryption key and a transfer of control back to the original API function.

The database **105** contains a list of the addresses of the API functions corresponding to the versions of the web browser **101,** where the API functions are characterized in that they receive, as one of their arguments, the session encryption key generated in the process of establishing the protected connection.

In another example of the disclosure, a method of analyzing the content of encrypted network traffic between the web browser **101** and the web site **102** is provided. According to this method, a list of addresses of API functions corresponding to the versions of the web browser **101** is stored in the database **105.** The API functions are characterized in that they receive, as one of their arguments, the session encryption key generated in the process of establishing the protected connection. The antivirus protection module **103** is used to route network traffic between the web browser **101** and the web site **102** through the proxy server **104.** The request to establish a protected connection between the web browser **101** and the website **102** may be discovered with the aid of the proxy server **104** (or with the aid of the antivirus protection means **103** under the control of which the proxy server **104** is running). With the aid of the agent **106,** the program module **107** is introduced into the address space of the web browser **101** and with its aid the call of the API function is intercepted at the address corresponding to the version of the web browser **101** in the database **105,** and a copy of the session encryption key is obtained. In another example, the program module **107** introduced into the address space of the web browser **101** is used to obtain the session encryption key by means of a call for the API function at an address corresponding to the version of the web browser **101** from the list in the database **105.** With the aid of the agent **106,** the obtained session encryption key is transferred to the antivirus protection means **103.** And with the aid of the antivirus protection means **103,** an analysis is made of the network traffic between the web browser **101** and the website **102,** decrypted by a copy of the session encryption key.

In the context of the proposed invention, the analysis of the network traffic between the web browser **101** and the web site **102** may be done either in synchronous or in asynchronous mode. In synchronous mode, the transmission of the data passing through the proxy server **104** is held up for the time needed to perform the analysis by the antivirus protection module **103.** Data found to be malicious according to the results of the analysis is removed from the network traffic. In asynchronous mode, the analysis of the data stream is done with no delay.

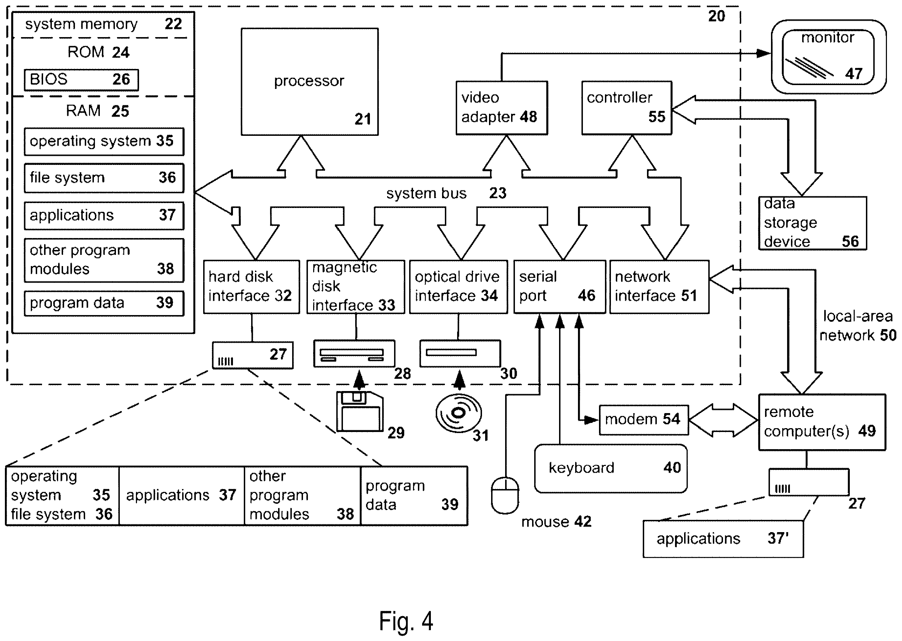

In the present disclosure, at least portions of the antivirus protection module **103,** the proxy server **104** and the database **105** may be implemented on the processor of a general-purpose computer (such as the one shown in **Fig. 4**).

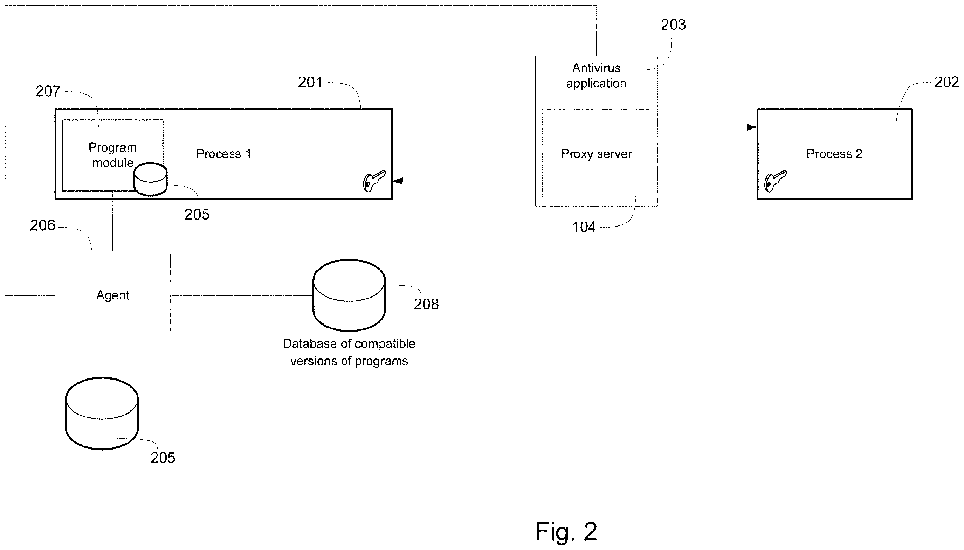

Fig. 2 shows a preferred example of the system of analysis of the content of encrypted traffic between processes. In one variant embodiment, the protected connection is established between two processes, the process **201** (the first process) and the process **202** (the second process). The process is an application that is being executed on the processor of the computer system. Furthermore, the application is characterized in that the application contains an internal realization of the cryptographical protocols designed to establish a protected connection to another application within which the network traffic being transferred between them is encrypted. In one variant embodiment, the processes execute on different computer systems: the process **201** executes on a first computer system, while the process **202** executes on a second computer system. In another variant embodiment, the process **201** and the process **202** execute on the same computer system.

In one variant embodiment, an agent **206** is also a process which is executed on a first computer system, while an antivirus protection means **203** and a proxy server **204** under the control of which the antivirus protection means **203** is running are executed on a remote server. In this variant, the agent **206** is a security application (such as an antivirus application). In another variant embodiment, the antivirus protection means **203** is a security application (such as an antivirus application) and it is executed on the first computer system. In this variant, the proxy server **204** and the agent **206** are means running on the first computer system under the control of the antivirus protection means **203.** The encrypted network traffic between the process **201** and the process **202** flows through the proxy server **204.**

The agent **206** has access to a database **205** containing a list of function addresses, characterized in that it returns the session encryption key generated when establishing the protected connection between the process **201** and the process **202.** In addition, the addresses of the mentioned function correspond to different applications and their versions. The agent **206** transfers the session key so obtained to the antivirus protection means **203.** In another variant embodiment, the agent **206** transfers the session key so obtained to the proxy server **204,** which is under the control of the antivirus protection means **203.** The database **205** is kept on a remote server or in a cloud service and in one variant embodiment it has a local copy which is kept on the first computer system and synchronized with the remotely residing database **205.**

The agent **206** also has access to a database of compatible program versions **208,** that, similar to the database **205,** is kept on a remote server or in a cloud service. In one example, the database is kept locally on the first computer system and is synchronized with the remotely residing database of compatible program versions **208.** In one example, the agent **206** before introducing a program module **207** into the address space of the process **201** verifies the compatibility of the introducing technology and/or of the program module **207** with the version of the application pertaining to the process **201.** If the version and the name of the application corresponding to the process **201** are contained in the database of compatible program versions **208,** the agent **206** carries out the introduction of the program module **207** in the address space of the process **201.** Absence of the version and name of the application corresponding to the process **201** means that the method provided in the claimed invention cannot be applied to the process **201.**

In a general example of the claimed invention, a method is carried out for analysis of the content of encrypted traffic between the process **201** and the process **202.** According to this method, a list of function addresses is kept in the database **205.** The database **205** returns the session encryption key that was generated while establishing a protected connection between the process **201** and the process **202.** The program module **207** is introduced with the aid of the agent **206** into the address space of the process **201.** In one example, the mentioned list from the database **205** is contained inside the program module **207** being introduced into the address space of the process **201.** The traffic between the process **201** and the process **202** is rerouted through the proxy server **204** with the aid of the agent **206** (or with the aid of the antivirus protection means **203** under the control of which the agent **206** is running).

The proxy server **204** discovers the protected connection between the process **201** and the process **202.** With the aid of the program module **207** introduced into the address space of the process **201,** the session encryption key is obtained by a function call at the address corresponding to the version of the application from the mentioned list from the database **205.** With the aid of the antivirus protection means **203,** the traffic between the process **201** and the process **202** is analyzed after the traffic is decrypted with the aid of the session encryption key. Furthermore, in one variant embodiment, before introducing the program module **207** into the address space of the process **201,** a verification is made of the compatibility of the current version of the application corresponding to the process **201** with mentioned method for analysis of the content of the encrypted traffic between the process **201** and the process **202** according to the database of compatible program versions **208.**

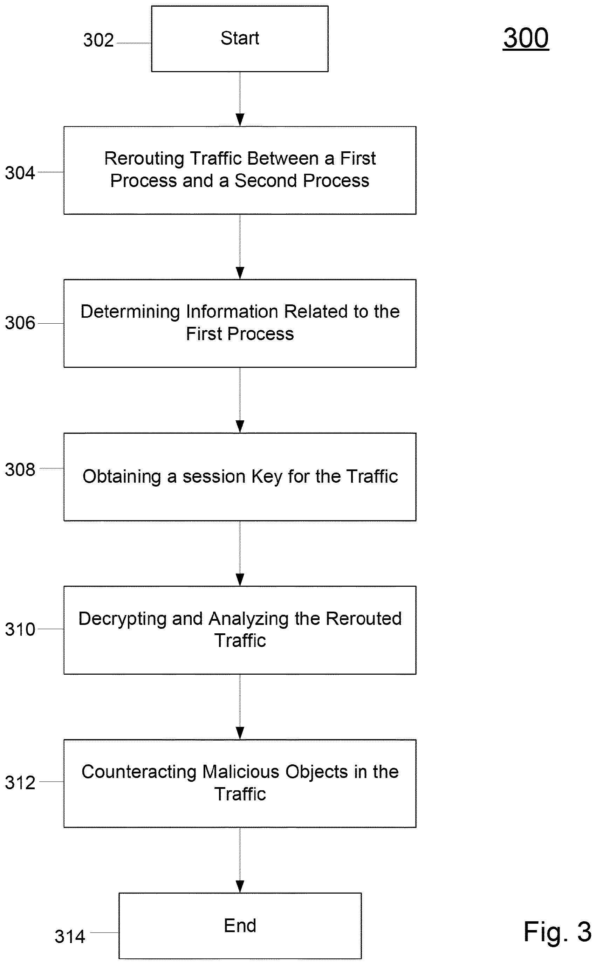

**Fig. 3** is a flow diagram of a method for analysis of content of encrypted traffic between processes.

The method begins at step **302** and proceeds to step **304.** At step **304,** the traffic between a first process executing on a first computing device and a second process is rerouted to a server. In some examples, the server may be a proxy server (e.g. proxy server **104**) or the like. In some examples, the second process may be a remote process, or a process that also executes on the same computing device executing the first process. The traffic is rerouted in order to determine whether there is a protected connection being established between the two processes. In some examples, this protected connection encrypts all information/traffic transmitted over the connection. In some examples, an agent (e.g., agent **206** of **Fig. 2**) performs the rerouting.

At step **306,** information related to an application pertaining to the first process is determined. In some examples, determining the information related to an application comprises querying a database for the information related to the application based on application data, such as version number of the application, name of the application or the like, and receiving the information related to the application. In some examples, the information related to the application includes addresses of functions that are intercepted to obtain a session key. The session key is used to decrypt the traffic between the two processes. In some examples, the functions are intercepted by introducing a program module (e.g., program module **207**) into the address space of the first process.

At step **308,** using the information related to the application, the session key is obtained. For example, the agent **206,** in some examples, introduces the program module **207** into the first process. The program module **207** may place the address of a new function call at the address of the old function that receives a session key indicated in the information related to the application. Instead of the first process sending the session key to the originally intended function, the session key is sent to the new function whose address was placed in the address space of the process. The session key is then obtained by the new function.

At step **310,** the obtained session key is used to decrypt the traffic that was rerouted to the server. The traffic is then analyzed to search for malicious objects in the traffic. In some examples, the analysis is performed synchronously, where analyzing further traffic is delayed until malicious objects found in the traffic currently being analyzed is removed or counteracted. In other examples, the analysis is performed asynchronously and continues without delay or regard to whether other malicious objects have been removed or counteracted.

At step **312,** the malicious objects found in the rerouted traffic are counteracted. In some examples, counteracting the malicious objects includes removing the malicious objects from the traffic, replacing the malicious objects in the traffic, or disabling the malicious objects.

The method terminates at **314.**

**Fig. 4** is a block diagram illustrating a general-purpose computer system 20 on which systems and methods disclosed herein may be implemented in accordance with an exemplary aspect. It should be noted that the computer system 20 can correspond to the system **100,** and/or individual components thereof.

As shown, the computer system **20** (which may be a personal computer or a server) includes a central processing unit **21,** a system memory **22,** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20,** may also comprise a hard disk **27** for reading and writing data, a magnetic disk drive **28** for reading and writing on removable magnetic disks **29,** and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the computer system **20.**

In one example, the hard disk **27,** the removable magnetic disk **29** and the removable optical disk **31** may be connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35,** may be stored, as well as additional program applications **37,** other program modules **38,** and program data **39.** A user of the computer system **20** may enter commands and information using keyboard **40,** mouse **42,** or any other input device known to those of ordinary skill in the art, such as, but not limited to, a microphone, joystick, game controller, scanner, etc... Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, etc.

Computer system **20** may operate in a network environment, using a network connection to one or more remote computers **49.** The remote computer (or computers) 49 may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and the networks generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are non-limiting examples of numerous well-understood ways of establishing a connection by one computer to another using communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 4, above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

## Claims

1. A method for analysis of content of encrypted traffic between processes, the method comprising:
rerouting to a server traffic between a first process executing on a first computing device and a second process executing on a second computing device to determine that there is a protected connection established between the first process and the second process;
determining, by the first computing device, information about an application associated with the first process, wherein the information is determined based at least on a version of the application and includes an address of a function to call that obtains a session key for the protected connection;
obtaining, by the first computing device, the session key for the protected connection by calling the function and transferring, by the first computing device, the session key to the server;
prior to calling the function, verifying, by the first computing device, compatibility of the version of the application with a method of analysis of content of the rerouted traffic;
decrypting the rerouted traffic using the session key and analyzing the rerouted traffic by the server using the compatible method to determine whether the traffic contains malicious objects; and
in response to determining the traffic contains malicious objects, counteracting, by the server, the malicious objects by blocking or rerouting the traffic.

2. The method of claim 1, further comprising:
injecting, by the first computing device, a program module into an address space of the first process; and
obtaining, by the first computing device the session key by instructing the program module to intercept a function called in establishing the protected connection.

3. The method of claim 1, wherein the server is a proxy server and the analysis is performed synchronously, wherein the traffic rerouted through the proxy server is delayed until analysis is complete and the malicious objects are removed from the traffic.

4. The method of claim 1, wherein the server is a proxy server and the analysis is performed asynchronously, wherein the analysis is performed continuously without delaying traffic rerouted through the proxy server.

5. The method of claim 1, wherein the application is a web browser.

6. A system for analysis of content of encrypted traffic between processes, the system comprising:
a hardware processor of a first computing device, a hardware processor of a second computing device and a hardware processor of a server configured to:
reroute to a server traffic between a first process executing on the hardware processor of the first computing device and a second process executing on the hardware processor of the second computing device to determine that there is a protected connection established between the first process and the second process;
determine, by the hardware processor of the first computing device, information about an application associated with the first process, wherein the information is determined based at least on a version of the application and includes an address of a function to call that obtains a session key for the protected connection;
obtain, by the hardware processor of the first computing device, the session key for the protected connection by calling the function and transfer, by the hardware processor of the first computing device, the session key to the server;
prior to calling the function, verify, by the hardware processor of the first computing device, compatibility of the version of the application with a method of analysis of content of the rerouted traffic;
decrypt the rerouted traffic using the session key and analyze the rerouted traffic by the hardware processor of the server using the compatible method to determine whether the traffic contains malicious objects; and in response to determining the traffic contains malicious objects, by the hardware processor of the server, counteract the malicious objects by blocking or rerouting the traffic.

7. The system of claim 6, wherein the server is a proxy server and the analysis is performed synchronously, wherein the traffic rerouted through the proxy server is delayed until analysis is complete and the malicious objects are removed from the traffic.

8. The system of claim 6, wherein the server is a proxy server and the analysis is performed asynchronously, wherein the analysis is performed continuously without delaying traffic rerouted through the proxy server.

## Patentansprüche

1. Verfahren zur Analyse von Inhalt von verschlüsseltem Verkehr bzw. Datenverkehr zwischen Prozessen, wobei das Verfahren umfasst:
Umleiten, zu einem Server, von Verkehr bzw. Datenverkehr zwischen einem ersten Prozess, der auf einer ersten Rechenvorrichtung ausgeführt wird, und einem zweiten Prozess, der auf einer zweiten Rechenvorrichtung ausgeführt wird, um zu bestimmen, dass zwischen dem ersten Prozess und dem zweiten Prozess eine geschützte Verbindung aufgebaut ist;
Bestimmen, durch die erste Rechenvorrichtung, von Informationen über eine Anwendung, die mit dem ersten Prozess verknüpft ist, wobei die Informationen basierend zumindest auf einer Version der Anwendung bestimmt werden und eine Adresse einer aufzurufenden Funktion enthalten, die einen Sitzungsschlüssel für die geschützte Verbindung erhält;
Erhalten, durch die erste Rechenvorrichtung, des Sitzungsschlüssels für die geschützte Verbindung durch Aufrufen der Funktion und Übertragen, durch die erste Rechenvorrichtung, des Sitzungsschlüssels an den Server;
vor dem Aufrufen der Funktion, Verifizieren, durch die erste Rechenvorrichtung, einer Kompatibilität der Version der Anwendung mit einem Verfahren zur Analyse von Inhalt des umgeleiteten Verkehrs;
Entschlüsseln des umgeleiteten Verkehrs unter Verwendung des Sitzungsschlüssels und Analysieren des umgeleiteten Verkehrs durch den Server unter Verwendung des kompatiblen Verfahrens, um zu bestimmen, ob der Verkehr schädliche Objekte enthält; und
ansprechend auf das Bestimmen, dass der Verkehr schädliche Objekte enthält, Entgegenwirken, durch den Server, der schädlichen Objekte, indem der Verkehr blockiert oder umgeleitet wird.

2. Verfahren nach Anspruch 1, ferner umfassend:
Einfügen, durch die erste Rechenvorrichtung, eines Programmmoduls in einen Adressraum des ersten Prozesses; und
Erhalten, durch die erste Rechenvorrichtung, des Sitzungsschlüssels, indem das Programmmodul instruiert wird, eine Funktion abzufangen, die beim Herstellen der geschützten Verbindung aufgerufen wird.

3. Verfahren nach Anspruch 1, wobei der Server ein Proxy-Server ist und die Analyse synchron durchgeführt wird, wobei der durch den Proxy-Server umgeleitete Verkehr verzögert wird, bis die Analyse abgeschlossen ist und die schädlichen Objekte aus dem Verkehr entfernt sind.

4. Verfahren nach Anspruch 1, wobei der Server ein Proxy-Server ist und die Analyse asynchron durchgeführt wird, wobei die Analyse kontinuierlich durchgeführt wird, ohne den durch den Proxy-Server umgeleiteten Verkehr zu verzögern.

5. Verfahren nach Anspruch 1, wobei die Anwendung ein Webbrowser ist.

6. System zur Analyse von Inhalt von verschlüsseltem Verkehr bzw. Datenverkehr zwischen Prozessen, wobei das System umfasst:
einen Hardwareprozessor einer ersten Rechenvorrichtung, einen Hardwareprozessor einer zweiten Rechenvorrichtung und einen Hardwareprozessor eines Servers, der konfiguriert ist zum:
Umleiten, zu einem Server, von Verkehr bzw. Datenverkehr zwischen einem ersten Prozess, der auf dem Hardwareprozessor der ersten Rechenvorrichtung ausgeführt wird, und einem zweiten Prozess, der auf dem Hardwareprozessor der zweiten Rechenvorrichtung ausgeführt wird, um zu bestimmen, dass zwischen dem ersten Prozess und dem zweiten Prozess eine geschützte Verbindung aufgebaut ist;
Bestimmen, durch den Hardwareprozessor der ersten Rechenvorrichtung, von Informationen über eine Anwendung, die mit dem ersten Prozess verknüpft ist, wobei die Informationen basierend zumindest auf einer Version der Anwendung bestimmt werden und eine Adresse einer aufzurufenden Funktion enthalten, die einen Sitzungsschlüssel für die geschützte Verbindung erhält;
Erhalten, durch den Hardwareprozessor der ersten Rechenvorrichtung, des Sitzungsschlüssels für die geschützte Verbindung durch Aufrufen der Funktion und Übertragen, durch den Hardwareprozessor der ersten Rechenvorrichtung, des Sitzungsschlüssels an den Server;
vor dem Aufrufen der Funktion, Verifizieren, durch den Hardwareprozessor der ersten Rechenvorrichtung, einer Kompatibilität der Version der Anwendung mit einem Verfahren zur Analyse von Inhalt des umgeleiteten Verkehrs;
Entschlüsseln des umgeleiteten Verkehrs unter Verwendung des Sitzungsschlüssels und Analysieren des umgeleiteten Verkehrs durch den Hardwareprozessor des Servers unter Verwendung des kompatiblen Verfahrens, um zu bestimmen, ob der Verkehr schädliche Objekte enthält; und
ansprechend auf das Bestimmen, dass der Verkehr schädliche Objekte enthält, Entgegenwirken, durch den Hardwareprozessor des Servers, der schädlichen Objekte, indem der Verkehr blockiert oder umgeleitet wird.

7. System nach Anspruch 6, wobei der Server ein Proxy-Server ist und die Analyse synchron durchgeführt wird, wobei der durch den Proxy-Server umgeleitete Verkehr verzögert wird, bis die Analyse abgeschlossen ist und die schädlichen Objekte aus dem Verkehr entfernt sind.

8. System nach Anspruch 6, wobei der Server ein Proxy-Server ist und die Analyse asynchron durchgeführt wird, wobei die Analyse kontinuierlich durchgeführt wird, ohne den durch den Proxy-Server umgeleiteten Verkehr zu verzögern.

## Revendications

1. Procédé pour une analyse d'un contenu d'un trafic chiffré entre des processus, le procédé comprenant :
le réacheminement vers un serveur d'un trafic entre un premier processus s'exécutant sur un premier dispositif informatique et un second processus s'exécutant sur un second dispositif informatique pour déterminer qu'il y a une connexion protégée établie entre le premier processus et le second processus ;
la détermination, par le premier dispositif informatique, d'informations concernant une application associée au premier processus, dans lequel les informations sont déterminées sur la base d'au moins une version de l'application et incluent une adresse d'une fonction à appeler qui obtient une clé de session pour la connexion protégée ;
l'obtention, par le premier dispositif informatique, de la clé de session pour la connexion protégée en appelant la fonction, et le transfert, par le premier dispositif informatique, de la clé de session au serveur ;
avant d'appeler la fonction, la vérification, par le premier dispositif informatique, de la compatibilité de la version de l'application avec un procédé d'analyse d'un contenu du trafic réacheminé ;
le déchiffrement du trafic réacheminé en utilisant la clé de session et l'analyse du trafic réacheminé par le serveur en utilisant le procédé compatible pour déterminer si le trafic contient des objets malveillants ; et
en réponse au fait de déterminer que le trafic contient des objets malveillants, le fait de contrer, par le serveur, les objets malveillants en bloquant ou réacheminant le trafic.

2. Procédé selon la revendication 1, comprenant en outre :
l'injection, par le premier dispositif informatique, d'un module de programme dans un espace adresse du premier processus ; et
l'obtention, par le premier dispositif informatique, de la clé de session en donnant l'ordre au module de programme d'intercepter une fonction appelée en établissant la connexion protégée.

3. Procédé selon la revendication 1, dans lequel le serveur est un serveur mandataire et l'analyse est réalisée de manière synchrone, dans lequel le trafic réacheminé par le biais du serveur mandataire est retardé jusqu'à ce que l'analyse soit complète et les objets malveillants soient retirés du trafic.

4. Procédé selon la revendication 1, dans lequel le serveur est un serveur mandataire et l'analyse est réalisée de manière asynchrone, dans lequel l'analyse est réalisée de manière continue sans retarder un trafic réacheminé par le biais du serveur mandataire.

5. Procédé selon la revendication 1, dans lequel l'application est un navigateur Web.

6. Système pour une analyse d'un contenu d'un trafic chiffré entre des processus, le système comprenant :
un processeur matériel d'un premier dispositif informatique, un processeur matériel d'un second dispositif informatique et un processeur matériel d'un serveur configurés pour :
réacheminer vers un serveur un trafic entre un premier processus s'exécutant sur le processeur matériel du premier dispositif informatique et un second processus s'exécutant sur le processeur matériel du second dispositif informatique pour déterminer qu'il y a une connexion protégée établie entre le premier processus et le second processus ;
déterminer, par le processeur matériel du premier dispositif informatique, des informations concernant une application associée au premier processus, dans lequel les informations sont déterminées sur la base d'au moins une version de l'application et incluent une adresse d'une fonction à appeler qui obtient une clé de session pour la connexion protégée ;
obtenir, par le processeur matériel du premier dispositif informatique, la clé de session pour la connexion protégée en appelant la fonction, et transférer, par le processeur matériel du premier dispositif informatique, la clé de session au serveur ;
avant d'appeler la fonction, vérifier, par le processeur matériel du premier dispositif informatique, la compatibilité de la version de l'application avec un procédé d'analyse d'un contenu du trafic réacheminé ;
déchiffrer le trafic réacheminé en utilisant la clé de session et analyser le trafic réacheminé par le processeur matériel du serveur en utilisant le procédé compatible pour déterminer si le trafic contient des objets malveillants ; et
en réponse au fait de déterminer que le trafic contient des objets malveillants, par le processeur matériel du serveur, contrer les objets malveillants en bloquant ou réacheminant le trafic.

7. Système selon la revendication 6, dans lequel le serveur est un serveur mandataire et l'analyse est réalisée de manière synchrone, dans lequel le trafic réacheminé par le biais du serveur mandataire est retardé jusqu'à ce que l'analyse soit complète et les objets malveillants soient retirés du trafic.

8. Système selon la revendication 6, dans lequel le serveur est un serveur mandataire et l'analyse est réalisée de manière asynchrone, dans lequel l'analyse est réalisée de manière continue sans retarder un trafic réacheminé par le biais du serveur mandataire.
